# EUROPÄISCHE PATENTSCHRIFT

(11) **EP 3 807 194 B1**
(45) Veröffentlichungstag und Bekanntmachung des Hinweises auf die Patenterteilung: **22.02.2023**
(21) Anmeldenummer: 19736307.0
(22) Anmeldetag: 13.06.2019
(51) Int. Cl.: B65G 13/02, B65G 13/07, B65G 39/02, B65G 39/09

(54) **FÖRDERROLLE**
CONVEYOR ROLLER
ROULEAU DE TRANSPORT

(30) Priorität: 13.06.2018 DE 102018004731
(43) Veröffentlichungstag der Anmeldung: 21.04.2021
(73) Patentinhaber: Interroll Holding AG, 6592 Sant' Antonino (CH)
(72) Erfinder: FISCHER, Fabian, 80339 München (DE); HEINLEIN, Steffen, 74924 Neckarbischofsheim (DE); LEHMANN, Nico, 74889 Sinsheim (DE); NEUDAHM, Dirk, 74930 Ittlingen (DE)
(74) Vertreter: Kohlhof, Stephan
(86) Internationale Anmeldenummer: PCT/EP2019/065515
(87) Internationale Veröffentlichungsnummer: WO 2019/238827

(56) Entgegenhaltungen:
- WO-A1-99/54241
- DE-A1- 4 028 970
- DE-C- 933 256
- US-A- 4 344 218
- US-A- 5 771 425
- US-A1- 2004 108 189
- US-A1- 2012 213 458

## Beschreibung

Die Erfindung betrifft eine Förderrolle für einen Palettenförderer zum Transportieren von Transportgütern wie Paletten und/oder Container.

Die derartige Förderrolle wird insbesondere eingesetzt, um mittels einer Fördereinrichtung Transportgüter wie Paletten und/oder Container zu transportieren. Dabei sind mehrere Förderrollen quer zur Transportrichtung ausgerichtet hintereinander angeordnet, von denen einige oder alle als Antriebsrollen ausgeführt sind. Beispielsweise bei einem Einsatz der Förderrolle in einem Gurtförderer ist eine seiner Endrollen als Antriebsrolle ausgebildet, wobei ein Fördergurt die Antriebsrolle und die andere Endrolle umschlingt. Angetrieben sind die Antriebsrollen üblicherweise von einem tangentialen Kettenantriebssystem oder einem Doppelkettenantriebssystem. Beim tangentialen Kettenantriebssystem werden alle Antriebsrollen von einer einzigen Antriebskette angetrieben, wobei eine Antriebskraft eines Antriebsmotors von der Antriebskette auf ein an einem freien Ende der jeweiligen Antriebsrolle vorgesehenes Kettenrad mit einreihigem Zahnkranz übertragen wird. Bei dem Doppelkettenantriebssystem ist an der jeweiligen Antriebsrolle ein Doppelkettenrad mit einem zweireihigen Zahnkranz vorgesehen und zwei, meist benachbarte, Antriebsrollen sind mittels Kettenkreisen zum Übertragen der Antriebskraft verbunden. Die jeweiligen Kettenräder sind üblicherweise mittels Schweißen an den Antriebsrollen angebracht, was eine zeit- und kostenintensive Fertigungsmethode ist. Bei nicht angetriebenen Förderrollen, sogenannten Laufrollen, ist an ihren beiden freien Enden je ein Rollenboden vorgesehen, der ein Lager zur Lagerung einer Rollenachse aufnimmt. Bei der oder den Antriebsrollen ist an dem dem Kettenrad gegenüberliegenden anderen freien Ende üblicherweise ein Rollenboden vorgesehen. WO99/54241A1 offenbart eine Förderrolle gemäß dem Oberbegriff des Anspruchs 1.

Vor diesem Hintergrund ist es eine Aufgabe der vorliegenden Erfindung, eine verbesserte Förderrolle und ein Verfahren zum Bereitstellen der verbesserten Förderrolle zur Verfügung zu stellen, die bzw. das insbesondere den zeitlichen und/oder finanziellen Herstellungsaufwand reduziert.

Die Aufgabe wird durch die Gegenstände der jeweiligen unabhängigen Patentansprüche gelöst.

Ein Aspekt betrifft eine Förderrolle gemäß Anspruch 1 für eine Fördereinrichtung, insbesondere zum Fördern von Paletten und/oder Containern, mit einem Rollenkörper und einem in ein freies Ende des Rollenkörpers eingesetzten Antriebskopf, der einen Befestigungsstutzen aufweist. An dem Befestigungsstutzen ist eine umlaufende Ringnut vorgesehen, wobei in der Ringnut mindestens ein Rücksprung ausgebildet ist. Die Ringnut und der Rücksprung sind zum in Axialrichtung schiebefesten und in Umfangsrichtung drehfesten Befestigen des Antriebskopfs an dem Rollenkörper zumindest teilweise mit Material des Rollenkörpers gefüllt. Mit anderen Worten weist der Rollenkörper im Bereich der Ringnut eine Einschnürung auf, wobei das Material des Rollenkörpers an einem Grund der Ringnut und des mindestens eines Rücksprungs zumindest teilweise anliegt.

Ein Vorteil der vorliegenden Erfindung ist eine vereinfachte Herstellung der Förderrolle ohne aufwändige Schweißarbeiten, die ihrerseits zeit- und damit kostenintensive konstruktive und fertigungstechnische Vor- und Nachbereitungsmaßnahmen bedingen würden.

Ein weiterer Vorteil der vorliegenden Erfindung ist, dass mit der erfindungsgemäßen Konfiguration auf einfache Art und Weise eine formschlüssige Befestigung des Antriebskopfs am Rollenkörper ohne einen oder mehrere separat ausgebildete Verbindungskörper verwirklicht ist.

Eine formschlüssige Verbindung oder Befestigung hat oft auch einen Kraftschluss-Anteil, beispielsweise durch festes Anziehen einer Schraube oder Schrumpfen nach Warmnieten; im Rahmen der vorliegenden Erfindung soll aber der Kraftschluss-Anteil vernachlässigt werden, wenn von Formschluss gesprochen wird.

Eine Fördereinrichtung im Sinne der vorliegenden Erfindung kann beispielsweise ein Palettenförderer oder auch ein Gurtförderer sein.

Ein Rollenkörper kann beispielsweise als ein hohlzylinderförmiges Rohr ausgebildet sein, das auch als Rollenmantel bezeichnet werden kann.

Ein Rollenboden kann insbesondere dazu verwendet werden, den Rollenkörper an dem dem Antriebskopf gegenüberliegenden freien Ende zu verschließen. Der Rollenboden kann im Wesentlichen zylinderförmig ausgebildet sein.

Ein Antriebskopf kann als Kettenradkopf oder als Doppelkettenradkopf ausgebildet sein.

Eine Ringnut kann als eine in Umfangsrichtung des Befestigungsstutzens verlaufende Vertiefung in einer Oberfläche des Befestigungsstutzens ausgebildet sein. Insbesondere kann die Ringnut eine konstante Tiefe, das heißt eine konstante Ausdehnung in Radialrichtung, aufweisen. Die zumindest teilweise mit Material des Rollenkörpers gefüllte Ringnut verhindert als formschlüssige Verbindung des Befestigungsstutzens mit dem Rollenkörper ein Verschieben des Befestigungsstutzens in Bezug auf den Rollenkörper in Axialrichtung und/oder ein Verkippen des Befestigungsstutzens im Rollenkörper.

Ein Rücksprung in der Ringnut ist erfindungsgemäß als eine Vertiefung der Ringnut ausgebildet, die eine größere Tiefe, das heißt Ausdehnung in Radialrichtung, aufweist als die übrige Ringnut. Insbesondere kann der Rücksprung regelmäßig ausgebildet sein, wobei seine Tiefe in Umfangsrichtung gesehen bis zu einem Maximum konstant ansteigt und ab da bis zu einem Minimum konstant abfällt und wobei die maximale Tiefe bei der halben Ausdehnung des Rücksprungs in Sekantenrichtung ausgebildet ist. Im Querschnitt stellt sich der Rücksprung vorzugsweise als Gerade bzw. Sekante dar. Der zumindest teilweise mit Material des Rollenkörpers gefüllte Rücksprung verhindert als formschlüssige Verbindung des Befestigungsstutzens mit dem Rollenkörper ein Verdrehen des Befestigungsstutzens in Bezug auf den Rollenkörper um dessen Längsachse.

Die nachfolgend verwendeten Begriffe "außen" oder "innen" und dergleichen bedeuten im Sinne der vorliegenden Erfindung, dass ein, insbesondere idealisierter oder gedachter, Mittelpunkt ein innerster Punkt ist. Ein in Bezug dazu äußerer Bereich ist ein, insbesondere idealisierter oder gedachter, Umfangsbereich. Ein Punkt oder Bereich, der als weiter außen liegend bezeichnet ist als ein anderer Punkt oder Bereich, liegt also in radialer Richtung von dem Mittelpunkt ausgehend weiter in Richtung des Umfangsbereichs entfernt als der andere Punkt oder Bereich.

Eine Axialrichtung oder axiale Richtung ist eine Richtung in einer Erstreckung einer Länge eines Bauteils. Bei beispielsweise einem hohlzylinderförmig ausgebildeten Rollenkörper ist die Axialrichtung etwa parallel zu einer Mantellinie oder der Längsachse des Rollenkörpers ausgerichtet.

Eine Radialrichtung oder radiale Richtung ist senkrecht zu der Axialrichtung ausgerichtet. Beispielsweise ist bei einem hohlzylinderförmig ausgebildeten Rollenkörper die Radialrichtung zusammenfallend mit dem Radius des Rollenkörpers ausgerichtet. Mit anderen Worten verläuft die Radialrichtung bei dem hohlzylinderförmig ausgebildeten Rollenkörper in Richtung seiner Wandstärke.

Eine Sekantenrichtung ist senkrecht zu der Axialrichtung in Richtung einer Sekante ausgerichtet. Bei einem beispielsweise zylinderförmig ausgebildeten Befestigungsstutzen, der quer zur Axialrichtung geschnitten eine kreisförmige Querschnittsfläche aufweist, verläuft die jeweilige Sekantenrichtung in Richtung einer Kreissehne.

Dementsprechend ist eine Umfangsrichtung eine Richtung in einer Erstreckung des Umfangs des Bauteils.

Bevorzugt sind mehrere Rücksprünge in der Ringnut ausgebildet. Somit kann eine Drehfestigkeit der Befestigung des Befestigungsstutzens mit dem Rollenkörper erhöht werden.

Weiter bevorzugt sind jeweils einander in Radialrichtung gegenüberliegende Rücksprünge in der Ringnut ausgebildet. Mit dieser symmetrischen Konfiguration kann eine Konstruktion und/oder Herstellung eines Befestigungsstutzens und/oder eines Presswerkzeugs zum zumindest teilweisen Füllen der Ringnut und des mindestens einen Rücksprungs mit Material des Rollenkörpers vereinfacht werden.

Bevorzugt ist an einem anderen freien Ende des Rollenkörpers ein Rollenboden angeordnet.

Weiter bevorzugt ist der Rollenboden mit einem identisch zu dem Antriebskopf ausgebildeten Befestigungsstutzen ausgebildet und identisch zu dem Antriebskopf an dem anderen freien Ende des Rollenkörpers befestigt. Mit dieser Konfiguration ist auf einfache Art und Weise die Herstellung einer Laufrolle (nicht angetriebene Förderrolle) mit den oben genannten Vorteilen verwirklicht.

Vorzugsweise ist ein Kettenrad oder eine Riemenscheibe oder eine Sicke (ringförmige Umfangsnut zur Aufnahme eines Rundriemens) mit dem Antriebskopf einstückig ausgebildet. Mit dieser Konfiguration ist auf einfache Art und Weise eine Antriebsrolle mit den oben genannten Vorteilen verwirklicht. Weiter ist somit eine Verdrehfestigkeit des Kettenrads in Bezug auf den Antriebskopf auf einfache Art und Weise verwirklicht. Zudem ist mittels der somit reduzierten Teilezahl eine Lagerhaltung vereinfacht.

Der Antriebskopf mit dem einstückig daran ausgebildeten Kettenrad kann spanlos geformt sein, beispielsweise gegossen, 3-D-gedruckt oder umgeformt, spanend geformt sein, beispielsweise aus dem vollen gefräst/gedreht oder mittels "Schneller Fertigung" ("Rapid Manufacturing") hergestellt sein. Alternativ dazu kann ein zunächst separat hergestellter Antriebskopf mit einem zunächst separat hergestellten Kettenrad verklebt oder vernietet und somit einstückig ausgebildet sein. Dabei können zum Sicherstellen der drehfesten Befestigung der beiden Teile im montierten Zustand ein oder mehrere ineinandergreifende Vor- und Rücksprünge an beiden Teilen vorgesehen sein.

Alternativ dazu ist ein Kettenrad bevorzugt lösbar an dem Antriebskopf befestigt. Mit dieser Konfiguration kann das Kettenrad bei Verschleiß desselben ausgewechselt werden, was somit die dabei anfallenden Kosten verringert. Somit ist ebenso denkbar, eine Zähnezahl des Kettenrads und damit die Drehzahl der Antriebsrolle zu verändern und auf einfache Art und Weise an unterschiedliche Anforderungen anzupassen, ohne die komplette Antriebsrolle auswechseln zu müssen.

Das Kettenrad kann beispielsweise mittels Verschrauben lösbar an dem Antriebskopf in Umfangsrichtung drehfest und in Axialrichtung schiebefest befestigt sein. Alternativ dazu können Kettenrad und Antriebskopf mittels eines oder mehreren an beiden Teilen vorgesehenen und im montierten Zustand ineinandergreifenden Vor- und Rücksprüngen formschlüssig drehfest miteinander verbunden sein, wobei als eine lösbare Sicherung gegen axiales Verschieben eine oder mehrere Halteschrauben vorgesehen sein können, die das Kettenrad mit dem Antriebskopf verbinden.

Weiter bevorzugt ist das Material des Rollenkörpers zum Füllen der Ringnut und des mindestens einen Rücksprungs kaltverformbar. Mit dieser Konfiguration ist die Befestigung des Befestigungsstutzens in dem Rollenkörper auf einfache Art und Weise und effizient herstellbar.

Vorzugsweise ist das Material mittels eines Presswerkzeugs kaltverformbar. Somit ist eine zuverlässige Verformung sichergestellt, die insbesondere eine gewünschte Füllung der Ringnut und des mindestens einen Rücksprungs mit gleichbleibender Qualität gewährleistet.

Beispielsweise kann das Material des Rollenkörpers zumindest teilweise Stahl, Kunststoff, Aluminium und/oder andere plastisch verformbare Materialien enthalten. Der allgemeine Begriff Aluminium schließt, insbesondere hochfeste, Aluminiumlegierungen ein.

Insbesondere können der Rollenkörper, der Antriebskopf und gegebenenfalls das lösbar am Antriebskopf befestigte Kettenrad aus Stahl hergestellt sein, insbesondere aus einer geeigneten Stahl enthaltenden Legierung.

Bevorzugt ist an dem Befestigungsstutzen ein Anschlagring für den Rollenkörper ausgebildet. Mit dieser Konfiguration ist ein korrektes Einsetzen des Antriebskopfs und/oder des Rollenbodens mit dem Befestigungsstutzen in den Rollenkörper auf einfache Art und Weise sichergestellt und ein Positionieren des Presswerkzeugs erleichtert.

Beispielsweise kann das Presswerkzeug gemäß einem bekannten konstanten Abstand in Axialrichtung zwischen dem Anschlagring und der Ringnut mit ausreichender Genauigkeit über der Ringnut positionierbar sein, wenn der Antriebskopf und/oder der Rollenboden im Rollenkörper eingesetzt ist.

Alternativ oder zusätzlich dazu kann eine Positionierungseinrichtung vorgesehen sein zum Positionieren des Antriebskopfs und/oder des Rollenbodens im Rollenkörper und/oder zum Positionieren des Presswerkzeugs über der Ringnut, wenn der Antriebskopf und/oder der Rollenboden im Rollenkörper eingesetzt ist. Beispielsweise kann eine optische Positionierungseinrichtung wie bei einer Durchstrahlprüfung ("Röntgenprüfung") vorgesehen sein, mittels der die Position der Ringnut bei im Rollenkörper eingesetzten Antriebskopf und/oder Rollenboden ermittelbar ist.

Das Innere des Rollenkörpers kann mittels eines Dichtelements gegen eine äußere Umgebung des Rollenkörpers abgedichtet sein. Vorteilhafterweise kann der Antriebskopf und/oder der Rollenboden mittels eines Dichtelements gegen den Rollenkörper abgedichtet sein. Weiter vorteilhaft kann der Antriebskopf und/oder der Rollenboden - insbesondere ein darin angeordnetes Lager, in dem eine Rollenachse gelagert ist - mittels eines Dichtelements gegen die Rollenachse abgedichtet sein.

Ein Aspekt der Erfindung betrifft ein Verfahren gemäß Anspruch 9 zum Bereitstellen einer Förderrolle mit einem oder mehreren der oben beschriebenen Merkmale, das die Schritte aufweist:
- Einsetzen des Antriebskopfs in das eine freie Ende des Rollenkörpers
- Befestigen des Antriebskopfs an dem Rollenkörper mittels
   - Positionieren des Presswerkzeugs um die Ringnut herum zum zumindest teilweisen Füllen der Ringnut und des mindestens einen Rücksprungs mit Material des Rollenkörpers und
   - zumindest teilweises Füllen der Ringnut und des mindestens einen Rücksprungs mit Material des Rollenkörpers mittels des Presswerkzeugs.

Die Vorteile des Verfahrens zum Bereitstellen der Förderrolle ergeben sich analog aus den zu der oben genannten Förderrolle genannten Merkmalen und deren Vorteilen.

Bevorzugt wird der Rollenboden mit einem identisch zu dem Antriebskopf ausgebildeten Befestigungsstutzen ausgebildet und identisch zu dem Antriebskopf an dem anderen freien Ende des Rollenkörpers befestigt.

Vorzugsweise wird das Material des Rollenkörpers beim Füllen der Ringnut und des mindestens einen Rücksprungs, insbesondere mittels eines Presswerkzeugs, kaltverformt.

Weiter bevorzugt erfolgt das zumindest teilweise Füllen der Ringnut und des mindestens einen Rücksprungs mittels des Presswerkzeugs in genau einem Arbeitsschritt. Somit wird auf effiziente Art und Weise der Befestigungsstutzen in dem Rollenkörper befestigt.

Die Förderrolle kann nach dem Befestigen der Befestigungsstutzen einer Oberflächenbehandlung unterzogen werden. Somit kann beispielsweise eine Rostschutzbehandlung erfolgen, ohne dass eine Nachbehandlung von Schweißnähten erforderlich ist.

Weiter kann die Förderrolle nach dem Befestigen der Befestigungsstutzen mit einem Lager für eine Rollenachse und einer Rollenachse ausgerüstet werden.

Weiter kann beim oder nach dem Befestigen der Befestigungsstutzen eine Dichtung zwischen dem Antriebskopf und/oder dem Rollenboden und dem Rollenkörper und/oder zwischen dem Lager und der Rollenachse vorgesehen werden.

Da alle Bestandteile der Förderrolle im Wesentlichen mechanisch zusammengesetzt werden, insbesondere ohne aufwändige Schweißarbeiten inklusive zeit- und arbeitsintensiver Vor- und Nachbereitung, lässt sich ein Herstellungsaufwand der Förderrolle verringern. Beispielsweise kann ein externer Galvanisierungsprozess entfallen, da wegen des Entfalls der Schweißarbeiten bereits verzinkte Rohre für den Rollenkörper verwendet werden können.

Nachfolgend sind Ausführungsbeispiele der erfindungsgemäßen Förderrolle anhand von Zeichnungen näher erläutert. Es versteht sich, dass die vorliegende Erfindung nicht auf die nachstehend beschriebenen Ausführungsbeispiele beschränkt ist, und dass einzelne Merkmale davon zu weiteren Ausführungsbeispielen kombiniert werden können.

Es zeigen:
- **Fig. 1**: einen Längsschnitt durch die Ringnut in einer Draufsicht auf die Förderrolle gemäß einem Ausführungsbeispiel der Erfindung;
- **Fig. 2**: einen Längsschnitt durch die Rücksprünge in einer Seitenansicht der Förderrolle gemäß Fig. 1;
- **Fig. 3**: einen Querschnitt durch die Ringnut mit den Rücksprüngen in einer Vorderansicht der Förderrolle gemäß Fig. 1;
- **Fig. 4**: eine räumliche Ansicht des geöffneten Presswerkzeugs für die Förderrolle gemäß Fig. 1;
- **Fig. 5**: einen Querschnitt durch das über der Ringnut und den Rücksprüngen positionierte geschlossene Presswerkzeug gemäß Fig. 4 in einer Vorderansicht der Förderrolle gemäß Fig. 1; und
- **Fig. 6**: ein Detail des geschlossenen Presswerkzeugs gemäß Fig. 5 im Längsschnitt durch einen Rücksprung.

Die Axialrichtung Ax, die Umfangsrichtung Um, die die Radialrichtung Ra und die Sekantenrichtung Se sind in den Figuren mittels Richtungspfeilen dargestellt, insbesondere in der Art eines Koordinatensystems. Obwohl die Richtungspfeile jeweils lediglich in eine Richtung zeigen, ist in der Richtungsangabe auch eine jeweilige Gegenrichtung enthalten. Es sind beispielhaft jeweils zwei Radialrichtungen Ra angegeben; damit soll lediglich ein Eindruck der vielen möglichen Radialrichtungen Ra vermittelt werden.

In der jeweiligen Draufsicht bzw. Seitenansicht fällt die Umfangsrichtung Um mit einer der Radialrichtungen Ra zusammen bzw. ist parallel zu dieser ausgerichtet und deswegen nicht extra dargestellt. Analog dazu fällt in der jeweiligen Draufsicht die Sekantenrichtung Se mit einer der Radialrichtungen Ra zusammen bzw. ist parallel zu dieser ausgerichtet und deswegen nicht extra dargestellt.

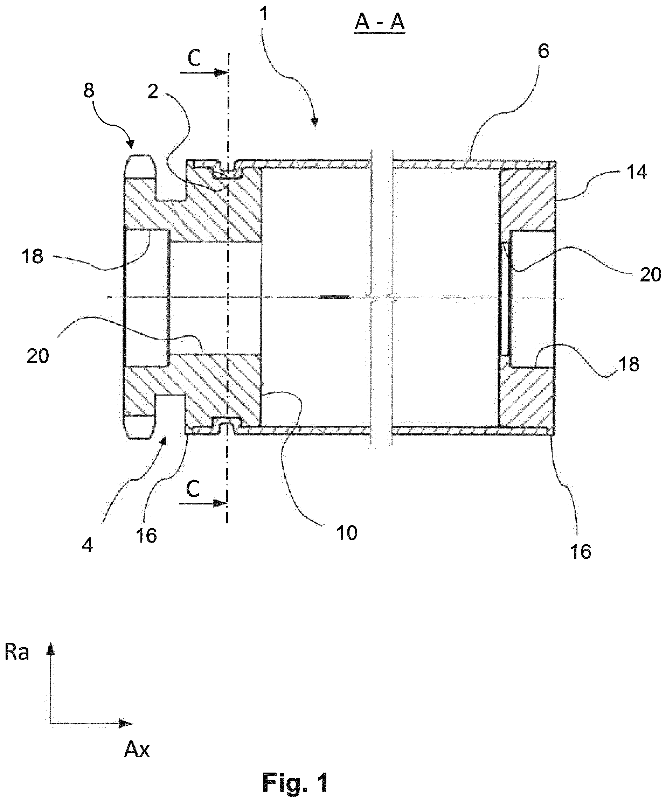

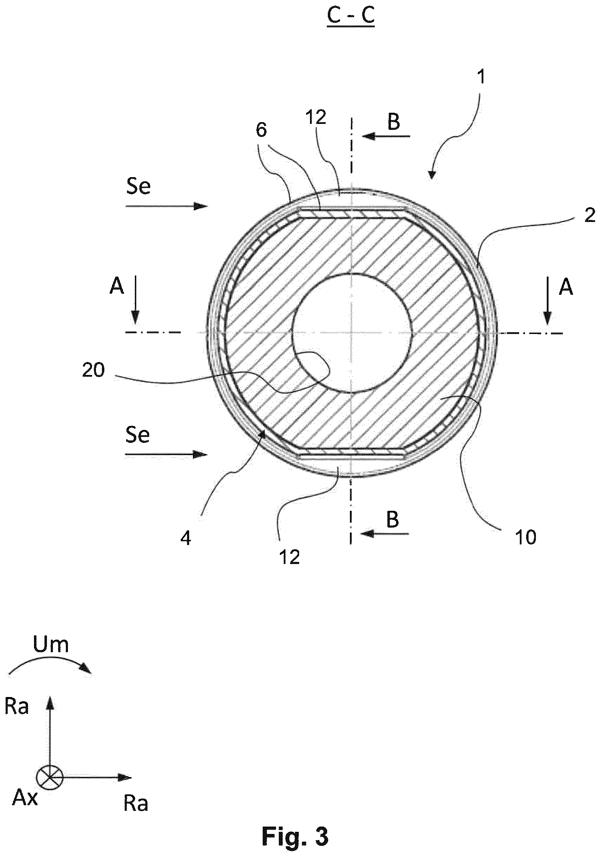

Eine in **Fig. 1** gezeigte Förderrolle 1 gemäß einem Ausführungsbeispiel der Erfindung ist in einem Längsschnitt A-A durch eine Ringnut 2 in einer Draufsicht dargestellt, wobei der Längsschnitt dem in Fig. 3 angegebenen Schnittverlauf A-A folgt.

Die Förderrolle 1 ist als Antriebsrolle ausgebildet, wobei deren Länge in Axialrichtung Ax verkürzt dargestellt ist.

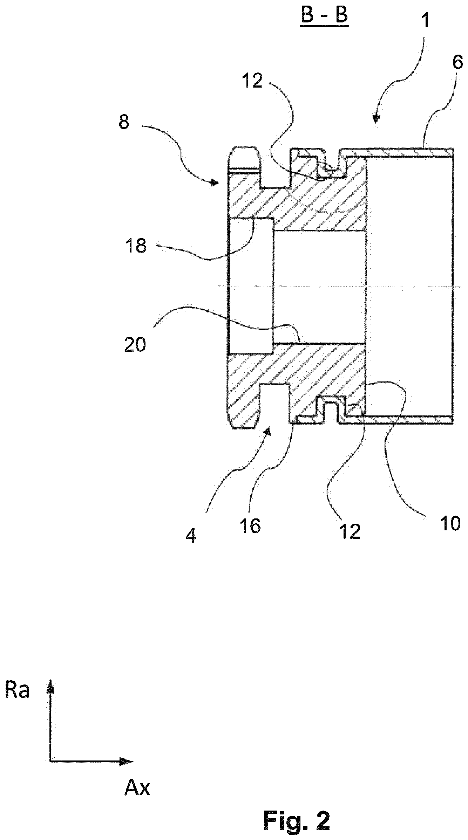

Ein Antriebskopf 4 an einem freien Ende eines Rollenkörpers 6 ist einstückig mit einem Kettenrad 8 ausgebildet und weist einen Befestigungsstutzen 10 mit der umlaufenden Ringnut 2 und zwei einander gegenüberliegenden Rücksprüngen 12 auf, die in Fig. 2 und Fig. 3 dargestellt sind. Ein Rollenboden 14 an einem anderen freien Ende des Rollenkörpers 6 ist in diesem Ausführungsbeispiel ohne den Befestigungsstutzen 10 ausgebildet. Alternativ dazu kann der Rollenboden 14 in einem anderen Ausführungsbeispiel wie der Antriebskopf 4 mit dem Befestigungsstutzen 10 ausgebildet und auf gleiche Weise mit dem Rollenkörper 6 befestigt sein wie der Antriebskopf 4.

Der Antriebskopf 4 ist bis zum Kontakt eines daran ausgebildeten Anschlagrings 16 mit dem einen freien Ende des Rollenkörpers 6 in den Rollenkörper 6 eingesetzt. In diesem Ausführungsbeispiel weist der Rollenboden 14 zwar - wie oben schon erwähnt - keinen Befestigungsstutzen 10 auf, er ist aber wie der Antriebskopf 4 mit dem Anschlagring 16 ausgebildet. Der Rollenboden 14 ist ähnlich wie der Antriebskopf 4 bis zum Kontakt des am Rollenboden 14 ausgebildeten Anschlagrings 16 mit dem anderen freien Ende des Rollenkörpers 6 in den Rollenkörper 6 eingesetzt.

Die Ringnut 2 des Antriebskopfs 4 ist zur in Axialrichtung Ax schiebefesten Befestigung des Antriebskopfs 4 am Rollenkörper 6 teilweise mit Material des Rollenkörpers 6 gefüllt.

Der Antriebskopf 4 und der Rollenboden 14 weisen jeweils eine Aufnahmebohrung 18 für (hier nicht dargestellte) Lager auf, in denen eine (hier nicht dargestellte) Rollenachse gelagert werden kann. Die Rollenachse kann durchgehend oder als Achsstummel ausgebildet sein. Der Antriebskopf 4 und der Rollenboden 14 weisen jeweils eine Durchgangsbohrung 20 für die Rollenachse auf.

Der in **Fig. 2** gezeigte Längsschnitt B-B durch die Rücksprünge 12 in einer Seitenansicht der Förderrolle 1 gemäß Fig. 1 folgt dem in Fig. 3 angegebenen Schnittverlauf B-B. Das andere freie Ende mit dem Rollenboden ist hier nicht dargestellt.

Im Unterschied zu Fig. 1 verläuft der Schnitt hier - wie erwähnt - durch die Rücksprünge 12 der in Fig. 1 gezeigten Ringnut 2. Die Tiefe, das heißt die Ausdehnung in Radialrichtung Ra, der Rücksprünge 12 ist deutlich größer als die Tiefe der übrigen Ringnut 2, die in Fig. 1 dargestellt ist. Die Rücksprünge 12 sind einander in Radialrichtung Ra gegenüberliegend ausgebildet.

**Fig. 3** zeigt einen Querschnitt C-C durch die Ringnut 2 mit den Rücksprüngen 12 in einer Vorderansicht der Förderrolle 1 gemäß Fig. 1. Der Querschnitt C-C verläuft entlang der in Fig. 1 angegebenen Schnittlinie C-C.

Die Rücksprünge 12 verlaufen jeweils entlang einer Sekantenrichtung Se und erreichen ihre maximale Tiefe, das heißt Ausdehnung in Radialrichtung Ra, In der Mitte ihrer Ausdehnung in Sekantenrichtung Se.

Die Ringnut 2 und die Rücksprünge 12 sind teilweise mit Material des Rollenkörpers 6 gefüllt. Der Rollenkörper 6 ist gewissermaßen im Bereich der Ringnut 2 eingeschnürt, wobei das Material des Rollenkörpers 6 am Grund der Ringnut 2 und der Rücksprünge 12 anliegt.

Der Befestigungsstutzen 10 des Antriebskopfs 4 weist eine Durchgangsbohrung 20 für die (hier nicht dargestellte) Rollenachse auf.

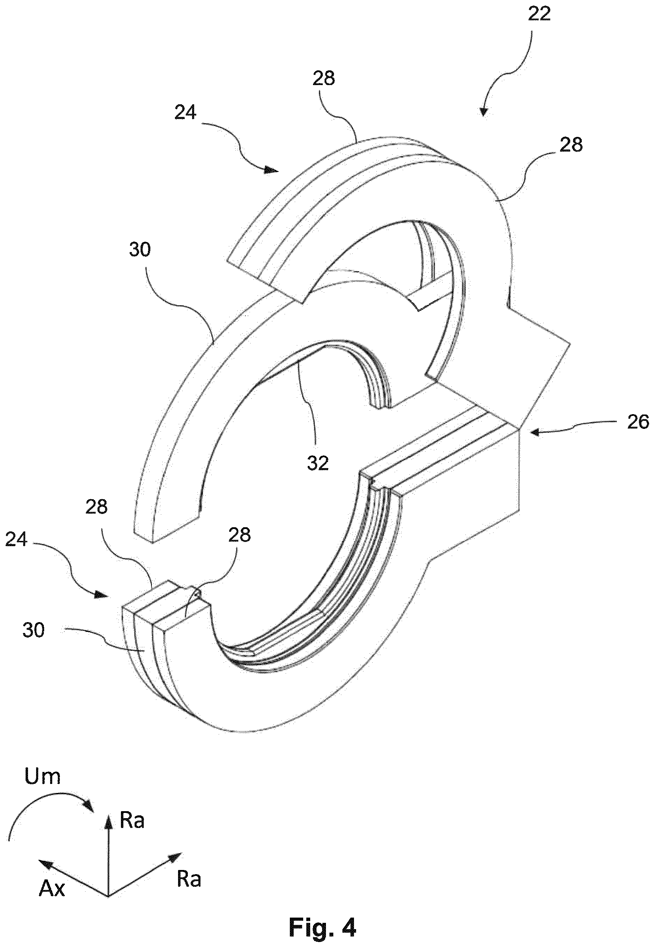

**Fig. 4** zeigt eine räumliche Ansicht des geöffneten Presswerkzeugs 22 für die Förderrolle 1 gemäß Fig. 1.

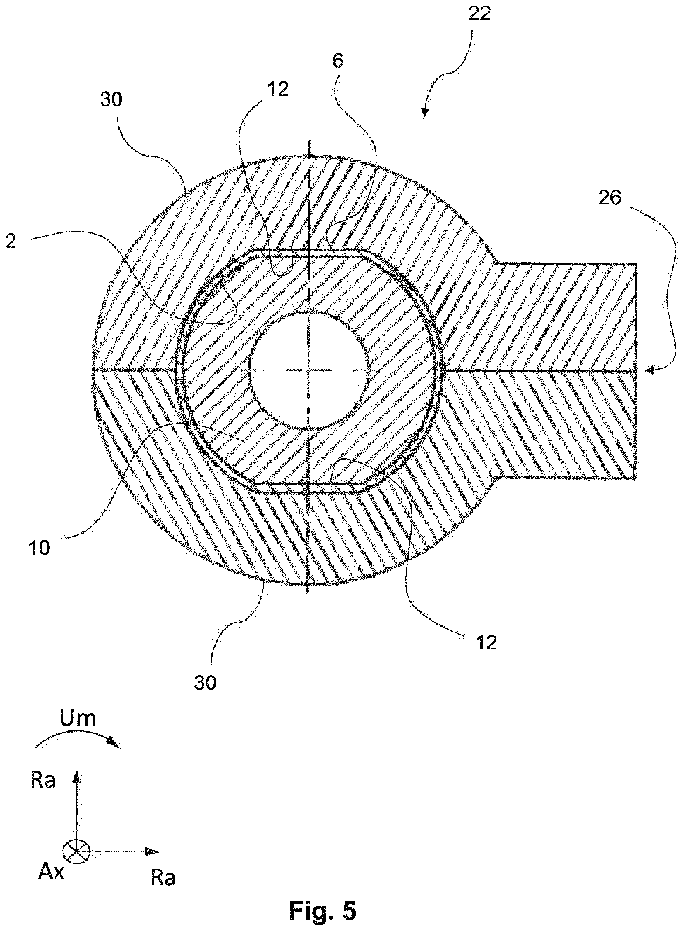

Das Presswerkzeug 22 kann wie in diesem Ausführungsbeispiel dargestellt zwei in Radialrichtung Ra einander gegenüberliegend anordenbare Niederhalter 24 aufweisen, von denen mindestens einer in Bezug auf den anderen um einen Gelenkpunkt 26 von einer in Fig. 4 dargestellten Öffnungsposition in eine in Fig. 5 dargestellte Schließposition rotatorisch verschwenkbar ist.

Jeder Niederhalter 24 kann zwei Arme 28 enthalten, die in Axialrichtung Ax einen unveränderlichen konstanten Abstand zueinander aufweisen. Die Arme 28 sind in Radialrichtung Ra innen mit einer etwa halbkreisförmigen Innenkontur ausgebildet, die etwa der Außenkontur des Rollenkörpers in Umfangsrichtung Um entspricht.

Weiter kann jeder der Niederhalter 24 zwischen den Armen 28 einen in Radialrichtung Ra translatorisch verfahrbaren Pressbügel 30 enthalten. Die beiden Pressbügel 30 können zueinander unterschiedlich große Verfahrwege aufweisen.

An jedem Pressbügel 30 kann in Axialrichtung Ax etwa mittig einen Presssteg 32 ausgebildet sein, die von dem übrigen Pressbügel 30 in Radialrichtung Ra nach innen absteht. Eine Breite, das heißt eine Ausdehnung in Axialrichtung Ax, des Pressstegs 32 ist kleiner als eine Gesamtbreite des Pressbügels 30. Der Presssteg 32 ist in Radialrichtung Ra innen mit einer etwa unterbrochen halbkreisförmigen Innenkontur ausgebildet (zwei Kreisbogenabschnitte, die mittels einer dem Rücksprung entsprechenden Gerade (Sekante) verbunden sind), die etwa der Außenkontur der Ringnut 2 und der Rücksprünge 12 in Umfangsrichtung Um entspricht.

**Fig. 5** zeigt einen Querschnitt durch das über der Ringnut 2 und den Rücksprüngen 12 positionierte geschlossene Presswerkzeug 22 gemäß Fig. 4 in einer Vorderansicht der Förderrolle 1 gemäß Fig. 1.

Die beiden Pressbügel 30 können in der dargestellten Schließposition des Presswerkzeugs 22 aneinander anliegen und somit für sich gegenseitig einen Anschlag bilden, um das Material des Rollenkörpers 6 auf einfache Art und Weise nicht mehr als gewünscht in die Ringnut 2 und die Rücksprünge 12 zu pressen.

In der Schließposition kann zwischen der Innenkontur der Pressbügel 30 und der Außenkontur der Ringnut 2 mit den Rücksprüngen 12 ein in Umfangsrichtung Um umlaufender Spalt mit etwa konstanter Tiefe, das heißt Ausdehnung in Radialrichtung Ra, ausgebildet sein, in dem das in die Ringnut 2 und die Rücksprünge 12 hineingepresste Material des Rollenkörpers 6 Platz findet.

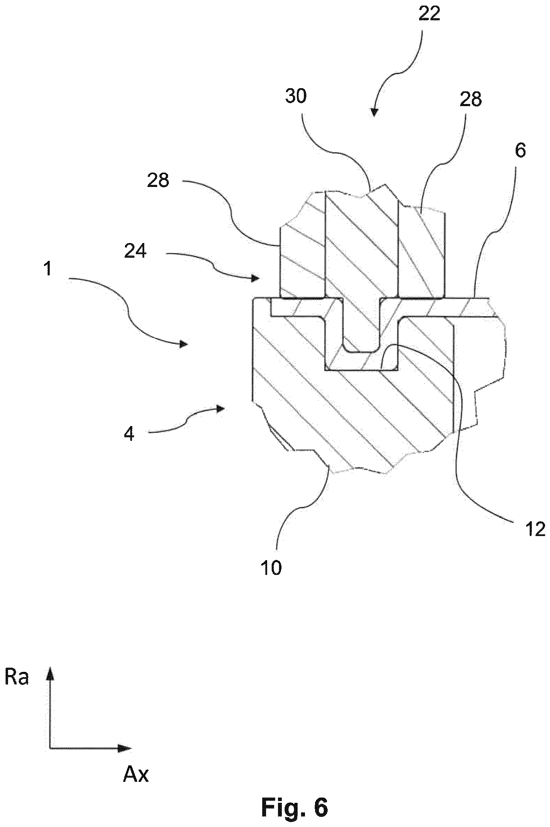

In dem Detail in **Fig. 6** ist einer der Rücksprünge 12 mit dem darüber positionierten geschlossenen Presswerkzeug 22 gemäß Fig. 5 im Längsschnitt der Seitenansicht der Förderrolle 1 gemäß Fig. 1 gezeigt. Der Längsschnitt entspricht dem Schnitt B-B in Fig. 2.

Das Material des Rollenkörpers 6 kann mittels der Niederhalter 24 auf den Rollenkörper 6 gedrückt und somit an diesen Stellen zwischen sich und dem Befestigungsstutzen 10 eingeklemmt sein. Das Material des Rollenkörpers 6 kann alternativ mittels der Niederhalter 24 derart auf den Rollenkörper 6 gedrückt sein, dass ein Fließen des Materials des Rollenkörpers zwischen dem Niederhalter 24 und dem Befestigungsstutzen 10 in Axialrichtung Ax ermöglicht ist, um ein Einschnüren des Materials im Bereich der Ringnut 2 weitestgehend zu verhindern. Weiter kann das Material des Rollenkörpers 6 zwischen den Armen 28 des Niederhalters 24 mittels des Pressbügels 30 in den Rücksprung 12 gedrückt und dieser damit teilweise gefüllt sein. Das Kettenrad 8 des dargestellten Antriebskopfs 4 Ist hier weggelassen.

### Bezugszeichenliste

- 1: Förderrolle
- 2: Ringnut
- 4: Antriebskopf
- 6: Rollenkörper
- 8: Kettenrad
- 10: Befestigungsstutzen
- 12: Rücksprung
- 14: Rollenboden
- 16: Anschlagring
- 18: Aufnahmebohrung
- 20: Durchgangsbohrung für Rollenachse
- 22: Presswerkzeug
- 24: Niederhalter
- 26: Gelenkpunkt
- 28: Arm
- 30: Pressbügel
- 32: Presssteg
- Ax: Axialrichtung
- Ra: Radialrichtung
- Se: Sekantenrichtung
- Um: Umfangsrichtung

## Patentansprüche

1. Förderrolle (1) für eine Fördereinrichtung, insbesondere zum Fördern von Paletten und/oder Containern, mit
einem Rollenkörper (6) und
einem in ein freies Ende des Rollenkörpers (6) eingesetzten Antriebskopf (4), der einen Befestigungsstutzen (10) aufweist, an dem eine umlaufende Ringnut (2) vorgesehen ist,
**dadurch gekennzeichnet,**
**dass** in der Ringnut (2) mindestens ein Rücksprung (12) ausgebildet ist, der eine Vertiefung mit einer größeren Tiefe in Radialrichtung aufweist als die übrige Ringnut, und
**dass** die Ringnut (2) und der Rücksprung (12) zum in Axialrichtung (Ax) schiebefesten und in Umfangsrichtung (Um) drehfesten Befestigen des Antriebskopfs (4) an dem Rollenkörper (6) zumindest teilweise mit Material des Rollenkörpers (6) gefüllt sind.

2. Förderrolle (1) nach Anspruch 1, wobei mehrere Rücksprünge (12) in der Ringnut (2) ausgebildet sind.

3. Förderrolle (1) nach Anspruch 1 oder 2, wobei jeweils einander radial gegenüberliegende Rücksprünge (12) in der Ringnut (2) ausgebildet sind.

4. Förderrolle (1) nach einem der Ansprüche 1 bis 3, wobei an einem anderen freien Ende des Rollenkörpers (6) ein Rollenboden (14) angeordnet ist.

5. Förderrolle (1) nach Anspruch 4, wobei der Rollenboden (14) mit einem identisch zu dem Antriebskopf (4) ausgebildeten Befestigungsstutzen (10) ausgebildet ist und identisch zu dem Antriebskopf (4) an dem anderen freien Ende des Rollenkörpers (6) befestigt ist.

6. Förderrolle (1) nach einem der vorherigen Ansprüche, wobei ein Kettenrad (8) mit dem Antriebskopf (4) einstückig ausgebildet ist oder an dem Antriebskopf (4) lösbar befestigt ist.

7. Förderrolle (1) nach einem der vorherigen Ansprüche, wobei das Material des Rollenkörpers (6) zum Füllen der Ringnut (2) und des mindestens einen Rücksprungs ( 12), insbesondere mittels eines Presswerkzeugs (22), kaltverformbar ist.

8. Förderrolle (1) nach einem der vorherigen Ansprüche, wobei an dem Befestigungsstutzen (10) ein Anschlagring (16) für den Rollenkörper (6) ausgebildet ist.

9. Verfahren zum Bereitstellen einer Förderrolle (1) nach einem der vorherigen Ansprüche, das die Schritte aufweist:
- Einsetzen des Antriebskopfs (4) in das eine freie Ende des Rollenkörpers (6)
- Befestigen des Antriebskopfs (4) an dem Rollenkörper (6) mittels - Positionieren des Presswerkzeugs (22) um die Ringnut (2) herum zum zumindest teilweisen Füllen der Ringnut (2) und des mindestens einen Rücksprungs (12) mit Material des Rollenkörpers (6) und
- zumindest teilweises Füllen der Ringnut (2) und des mindestens einen Rücksprungs (12) mit Material des Rollenkörpers (6) mittels des Presswerkzeugs (22).

10. Verfahren nach Anspruch 9, wobei das zumindest teilweise Füllen der Ringnut (2) und des mindestens einen Rücksprungs (12) mittels des Presswerkzeugs (22) in genau einem Arbeitsschritt erfolgt.

## Claims

1. Conveyor roller (1) for a conveyor device, in particular for conveying pallets and/or containers, having
a roller body (6) and
a drive head (4) which is inserted into a free end of the roller body (6) and has an attachment socket (10) on which a circumferential annular groove (2) is provided,
**characterised in**
**that** at least one recess (12) is formed in the annular groove (2), which recess has a depression with a greater depth in the radial direction than the rest of the annular groove, and
**that** the annular groove (2) and the recess (12) are at least partially filled with material of the roller body (6) for fastening the drive head (4) to the roller body (6) in a manner that is fixed against sliding in the axial direction (Ax) and against rotation in the circumferential direction (Um).

2. Conveyor roller (1) according to claim 1, wherein several recesses (12) are formed in the annular groove (2).

3. Conveyor roller (1) according to claim 1 or 2, wherein in each case radially opposite recesses (12) are formed in the annular groove (2).

4. Conveyor roller (1) according to any one of claims 1 to 3, wherein a roller bottom (14) is arranged at another free end of the roller body (6).

5. Conveyor roller (1) according to claim 4, wherein the roller base (14) is formed with an attachment socket (10) identical to the drive head (4) and is attached identically to the drive head (4) to the other free end of the roller body (6).

6. Conveyor roller (1) according to any one of the preceding claims, wherein a sprocket (8) is formed integrally with the drive head (4) or is detachably attached to the drive head (4).

7. Conveyor roller (1) according to one of the previous claims, wherein the material of the roller body (6) for filling the annular groove (2) and the at least one recess (12) is cold-formable, in particular by means of a pressing tool (22).

8. Conveyor roller (1) according to one of the previous claims, wherein a stop ring (16) for the roller body (6) is formed on the fastening connection piece (10).

9. A method of providing a conveyor roller (1) according to any one of the preceding claims, comprising the steps of:
- Inserting the drive head (4) into the one free end of the roller body (6),
- securing the drive head (4) to the roller body (6) by means of
- positioning the pressing tool (22) around the annular groove (2) for at least partially filling the annular groove (2) and the at least one recess (12) with material of the roller body (6) and
- at least partial filling of the annular groove (2) and the at least one recess (12) with material of the roller body (6) by means of the pressing tool (22).

10. Method according to claim 9, wherein the at least partial filling of the annular groove (2) and of the at least one recess (12) is carried out by means of the pressing tool (22) in exactly one working step.

## Revendications

1. Rouleau de transport (1) pour un dispositif de transport, notamment pour le transport de palettes et/ou de conteneurs, avec
un corps de rouleau (6) et
une tête d'entraînement (4) insérée dans une extrémité libre du corps de rouleau (6), qui présente un embout de fixation (10) sur lequel est prévue une rainure annulaire périphérique (2),
**caractérisé**
**en ce que** dans la rainure annulaire (2) est formé au moins un retrait (12) qui présente un creux d'une profondeur plus grande en direction radiale que le reste de la rainure annulaire, et
**en ce que** la rainure annulaire (2) et le retrait (12) sont au moins partiellement remplis de matériau du corps de rouleau (6) pour la fixation de la tête d'entraînement (4) au corps de rouleau (6) de manière immobile en coulissement dans la direction axiale (Ax) et de manière immobile en rotation dans la direction circonférentielle (Um).

2. Rouleau de transport (1) selon la revendication 1, dans lequel plusieurs retraits (12) sont formés dans la rainure annulaire (2).

3. Rouleau de transport (1) selon la revendication 1 ou 2, dans lequel des retraits (12) radialement opposés les uns aux autres sont formés dans la rainure annulaire (2).

4. Rouleau de transport (1) selon l'une quelconque des revendications 1 à 3, dans lequel un fond de rouleau (14) est agencé à une autre extrémité libre du corps de rouleau (6).

5. Rouleau de transport (1) selon la revendication 4, dans lequel le fond de rouleau (14) est formé avec un embout de fixation (10) formé de manière identique à la tête d'entraînement (4) et est fixé de manière identique à la tête d'entraînement (4) à l'autre extrémité libre du corps de rouleau (6).

6. Rouleau de transport (1) selon l'une quelconque des revendications précédentes, dans lequel une roue à chaîne (8) est formée d'un seul tenant avec la tête d'entraînement (4) ou est fixée de manière amovible à la tête d'entraînement (4).

7. Rouleau de transport (1) selon l'une quelconque des revendications précédentes, dans lequel le matériau du corps de rouleau (6) est déformable à froid pour le remplissage de la rainure annulaire (2) et de l'au moins un retrait (12), notamment au moyen d'un outil de pressage (22).

8. Rouleau de transport (1) selon l'une quelconque des revendications précédentes, dans lequel une bague de butée (16) pour le corps de rouleau (6) est formée sur l'embout de fixation (10).

9. Procédé de fourniture d'un rouleau de transport (1) selon l'une quelconque des revendications précédentes, qui comprend les étapes suivantes :
- l'insertion de la tête d'entraînement (4) dans une extrémité libre du corps de rouleau (6),
- la fixation de la tête d'entraînement (4) au corps de rouleau (6) au moyen
- d'un positionnement de l'outil de pressage (22) autour de la rainure annulaire (2) pour le remplissage au moins partiel de la rainure annulaire (2) et de l'au moins un retrait (12) avec du matériau du corps de rouleau (6), et
- le remplissage au moins partiel de la rainure annulaire (2) et de l'au moins un retrait (12) avec du matériau du corps de rouleau (6) au moyen de l'outil de pressage (22).

10. Procédé selon la revendication 9, dans lequel le remplissage au moins partiel de la rainure annulaire (2) et de l'au moins un retrait (12) au moyen de l'outil de pressage (22) est effectué en exactement une étape de travail.
